# EUROPEAN PATENT APPLICATION

(11) **EP 1 734 227 A1**
(43) Date of publication of application: **20.12.2006**
(21) Application number: 06252964.9
(22) Date of filing: 08.06.2006
(51) Int. Cl.: F01D 5/20, F01D 5/22, F01D 11/08

(54) **V-shaped blade tip shroud and method of fabricating same**

(30) Priority: 13.06.2005 US 150929
(71) Applicant: GENERAL ELECTRIC COMPANY, Schenectady, New York 12345 (US)
(72) Inventor: Heyward, John Peter, Loveland, Ohio 45140 (US); Bobie, Francis, Hamilton, Ohio 45011 (US); Beverley, Michael, West Chester, Ohio 45069 (US)
(74) Representative: Pedder, James Cuthbert

(57) **Abstract**

A turbine blade and a method of fabricating the same. The method for fabricating a turbine blade includes casting at least one turbine blade that includes a blade tip shroud (112) and at least one seal tooth (114) coupled to the blade tip shroud, and removing at least a portion (116) of the turbine blade such that a radially outer surface (118) of the blade tip shroud has at least two substantially flat surfaces. Preferably, the blade tip shroud (112) has a substantially V-shaped cross-sectional profile (120).

## Description

This invention relates generally to turbine assemblies, and more particularly, to methods and apparatus for fabricating gas turbine engine rotor blades.

Gas turbine engines typically include a compressor, a combustor, and at least one turbine. The compressor compresses air which is mixed with fuel and channeled to the combustor. The mixture is then ignited for generating hot combustion gases, and the combustion gases are channeled to the turbine which extracts energy from the combustion gases for powering the compressor, as well as producing useful work to propel an aircraft in flight or to power a load, such as an electrical generator.

The turbine includes a rotor assembly and a stator assembly. The rotor assembly includes a plurality of rotor blades extending radially outward from a disk. More specifically, each rotor blade extends radially between a platform adjacent the disk and a blade tip. A combustion gas flowpath through the rotor assembly is bound radially inward by the rotor blade platforms, and radially outward by a plurality of shrouds, wherein each shroud includes at least one seal tooth.

At least one known gas turbine blade is fabricated utilizing a nickel based alloy to produce a turbine blade that has a substantially curved outer shroud. For example, the turbine blade is cast with additional stock that is removed utilizing a simple radial grind operation to produce the finished outer shroud and the seal teeth. More specifically, the nickel based alloy is cast "to size", i.e. the turbine blade does not require significant machining to produce the finished turbine blade.

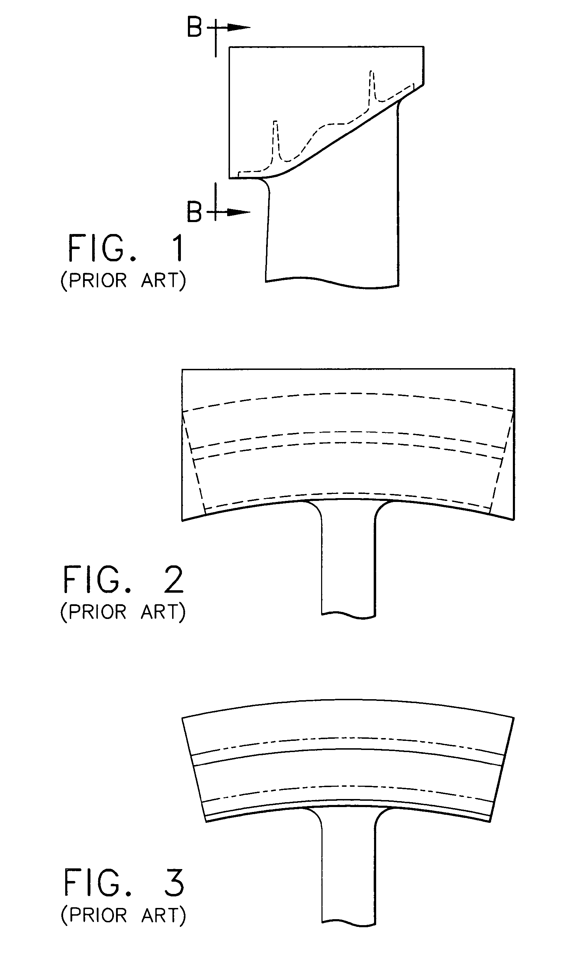

However, if the gas turbine blade is fabricated utilizing a different material, for example, a titanium aluminide material, casting a turbine blade that includes a substantially curved shroud and at least one seal tooth, produces a turbine blade that has no "as-cast" surfaces. More specifically, casting a turbine blade utilizing titanium aluminide produces a turbine blade that has a large amount of excess material relative to the final machined configuration, shown in Figures 1 and 2. Therefore, at least two machining operations are required to remove the excess material to form the finished turbine blade having a curved outer shroud and seal teeth, shown in Figure 3. Accordingly, fabricating a gas turbine blade having a curved outer shroud utilizing a material other than nickel based alloy facilitates increasing the cost of fabricating the turbine blade, thus increasing the cost of the blade to the customer.

In one aspect of the invention, a method for fabricating a turbine blade for a gas turbine engine is provided. The gas turbine engine includes a turbine including a plurality of turbine blades. The method includes casting at least one turbine blade that includes a blade tip shroud and at least one seal tooth coupled to the blade tip shroud, and removing at least a portion of the turbine blade such that a radially outer surface of the blade tip shroud has at least two substantially flat surfaces.

In another aspect of the invention, a turbine rotor blade is provided. The turbine rotor blade includes a blade tip shroud having a radially outer surface including at least two substantially flat surfaces, and at least one seal tooth coupled to said blade tip shroud.

In a further aspect of the invention, a gas turbine engine rotor assembly is provided. The rotor assembly includes a low pressure turbine rotor, and a plurality of circumferentially-spaced rotor blades coupled to the low pressure turbine rotor. Each rotor blade includes having a radially outer surface including at least two substantially flat surfaces, and at least one seal tooth coupled to said blade tip shroud.

The invention will now be described in greater detail, by way of example, with reference to the drawings, in which:-
Figure 1 is a side view of a known gas turbine blade during initial fabrication;
Figure 2 is a cross-sectional view of the known gas turbine blade shown in Figure 1 during initial fabrication;
Figure 3 is a cross-sectional view of the known gas turbine blade shown in Figures 1 and 2 after machining is completed;
Figure 4 is a cross-sectional view of an exemplary gas turbine engine;
Figure 5 is a partial cut-away cross-sectional view of a rotor assembly and a stator assembly that may be used with the gas turbine engine shown in Figure 4;
Figure 6 is an exemplary method of fabricating a turbine blade that can be utilized with the gas turbine shown in Figure 4;
Figure 7 is a side view of an exemplary gas turbine blade that can be used with the gas turbine engine shown in Figure 4 during an initial fabrication stage;
Figure 8 is a perspective view of exemplary gas turbine blade shown in Figure 7 after subsequent fabrication;
Figure 9 is a side view of the gas turbine blade shown in Figure 8; and
Figure 10 is a cross-sectional view of the gas turbine blade shown in Figure 9.

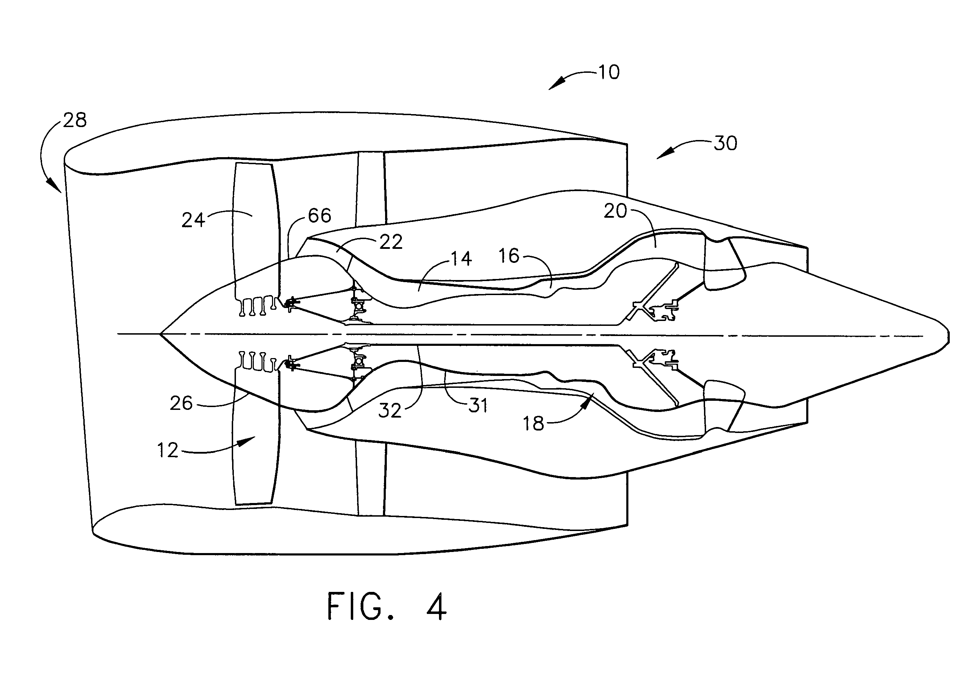

Figure 4 is a schematic illustration of a gas turbine engine 10 including a fan assembly 12, a high pressure compressor 14, and a combustor 16. Engine 10 also includes a high pressure turbine 18, a low pressure turbine 20, and a booster 22. Fan assembly 12 includes an array of fan blades 24 extending radially outward from a rotor disc 26. Engine 10 has an intake side 28 and an exhaust side 30. In one embodiment, the gas turbine engine is a GE90 available from General Electric Company, Cincinnati, Ohio. In an alternative embodiment, engine 10 includes a low pressure compressor. Fan assembly 12, booster 22, and turbine 20 are coupled by a first rotor shaft 31, and compressor 14 and turbine 18 are coupled by a second rotor shaft 32.

In operation, air flows through fan assembly 12 and compressed air is supplied to high pressure compressor 14 through booster 22. The highly compressed air is delivered to combustor 16. Hot products of combustion (not shown in Figure 1) from combustor 16 drives turbines 18 and 20, and turbine 20 drives fan assembly 12 and booster 22 by way of shaft 31. Engine 10 is operable at a range of operating conditions between design operating conditions and off-design operating conditions.

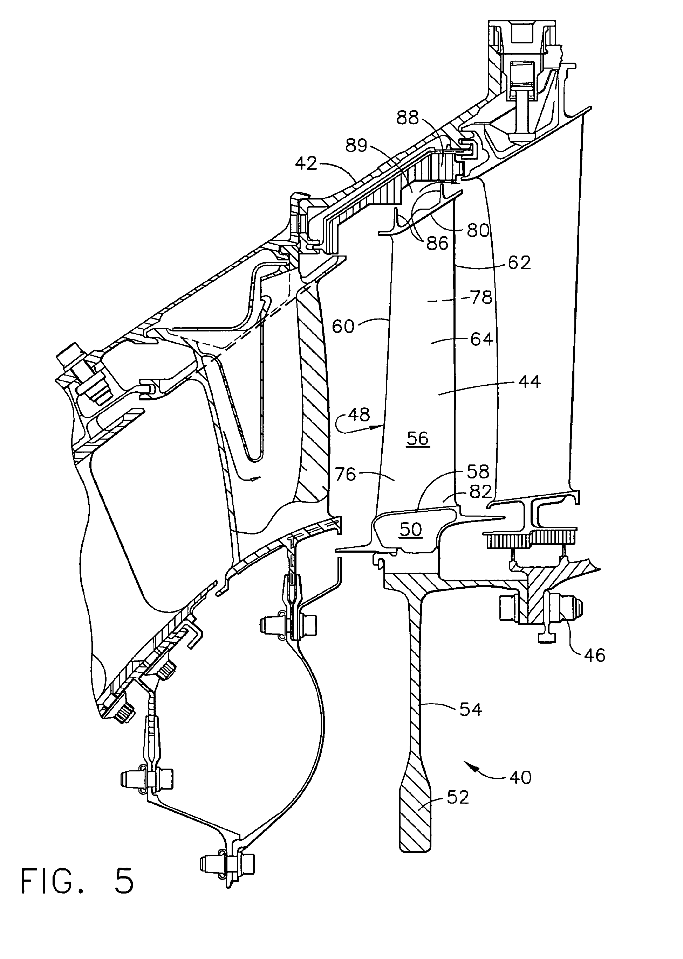

Figure 5 is a partial cut-away cross-sectional view of a turbine rotor assembly 40 including a stator 42 that may be used with gas turbine engine 10. In the exemplary embodiment, turbine rotor assembly 40 can be utilized as a low pressure turbine with gas turbine engine 10. In the exemplary embodiment, rotor assembly 40 includes a plurality of rotors 44 joined together by couplings 46 co-axially about an axial centerline axis (not shown). Each rotor 44 is formed by one or more blisks 48, and each blisk 48 includes an annular radially outer rim 50, a radially inner hub 52, and an integral web 54 extending radially therebetween. Each blisk 48 also includes a plurality of blades 56 extending radially outwardly from outer rim 50. In one embodiment, blades 56 are integrally joined with respective rims 50. Alternatively, and for at least one stage, each rotor blade 56 may be removably joined to a respective rim 50 in a known manner using blade dovetails (not shown) which mount in complementary slots (not shown) in a respective rim 50.

Rotor blades 56 are configured for cooperating with a motive or working fluid, such as air. In the exemplary embodiment, rotor assembly 40 is a turbine, such as low pressure turbine 20 (shown in Figure 4), with rotor blades 56 configured for suitably directing the motive fluid air in succeeding stages. Outer surfaces 58 of rotor rims 50 define a radially inner flow-path surface of turbine 20 as air flows from stage to stage.

Blades 56 rotate about the axial centerline axis up to a specific maximum design rotational speed, and generate centrifugal loads in rotating components. Centrifugal forces generated by rotating blades 56 are carried by portions of rims 50 directly below each rotor blade 56. Rotation of rotor assembly 40 and blades 56 extracts energy from the air which causes turbine 20 to rotate and provide power to drive low pressure compressor 12 (shown in Figure 1). The radially inner flow-path is bound circumferentially by adjacent rotor blades 56 and is bound radially with a shroud 80.

Rotor blades 56 each include a leading edge 60, a trailing edge 62, and an airfoil 64 extending therebetween. Each airfoil 64 includes a suction side 76 and a circumferentially opposite pressure side 78. Suction and pressure sides 76 and 78, respectively, extend between axially spaced apart leading and trailing edges 60 and 62, respectively and extend in radial span between a rotor blade tip shroud 80 and a rotor blade root 82. A blade chord is measured between rotor blade trailing and leading edges 62 and 60, respectively. In the exemplary embodiment, rotor blades 56 include rotor seal teeth 86 which rotate adjacent to a stator shroud 88 and through a cavity 89 defined by stator shroud 88 and rotor blade tip shroud 80.

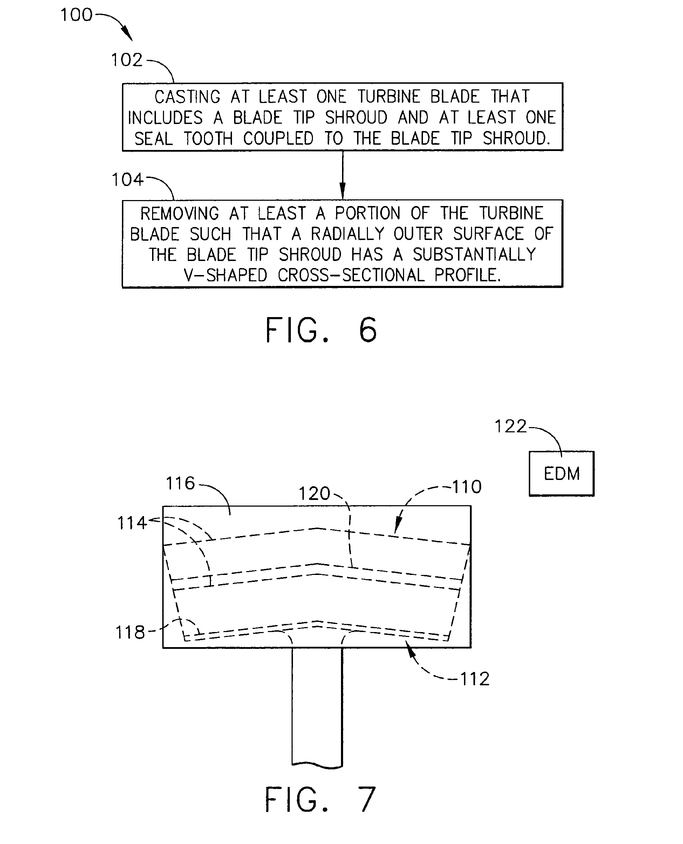

Figure 6 is a flowchart illustrating an exemplary method 100 of fabricating a gas turbine rotor blade 110 that can be utilized with a gas turbine engine such as, but not limited to gas turbine 10, shown in Figure 4. In the exemplary embodiment, method 100 includes casting 102 at least one turbine blade 110 that includes a blade tip shroud 112 and at least one seal tooth 114 coupled to blade tip shroud 112, and removing 104 at least a portion 116 of turbine blade 110 such that a radially outer surface 118 of blade tip shroud 112 has a substantially V-shaped cross-sectional profile 120.

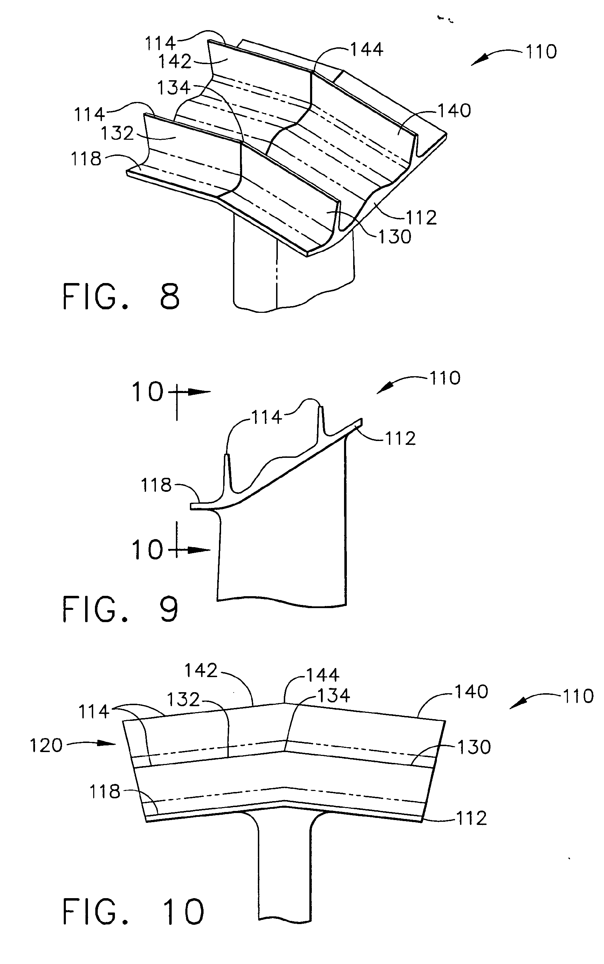

Figure 7 is a side view of gas turbine blade 110 during an initial fabrication stage. Figure 8 is a perspective view of gas turbine blade 110 shown in Figure 7 after subsequent fabrication. Figure 9 is a side view of gas turbine blade 110 shown in Figure 8. Figure 10 is a cross-sectional view of gas turbine blade 110 shown in Figure 9. In the exemplary embodiment, turbine blade 110 is a low-pressure turbine rotor blade that is coupled to a low pressure turbine such as, low pressure turbine 20, shown in Figure 4. In another embodiment, method 100 can be utilized to fabricate any turbine blade utilized within gas turbine engine 10, shown in Figure 4.

In the exemplary embodiment, gas turbine blade 110 is cast utilizing a metallic material. In the exemplary embodiment, gas turbine blade 110 is cast utilizing a titanium aluminide material, for example. In the exemplary embodiment, turbine blade 110 is "overcast", that is turbine blade 110 includes a portion 116 that must be removed to produce a finished blade 110.

In the exemplary embodiment, after turbine blade 110 is cast, excess portion 116 is removed utilizing an electron discharge machining (EDM) apparatus 122. More specifically, EDM apparatus 122 is configured to remove excess portion 116 such that blade tip shroud 112 and at least one seal tooth 114 are formed, and such that radially outer surface 118 of blade tip shroud 112 has a substantially V-shaped cross-sectional profile 120.

More specifically, blade tip shroud 112 if formed such that blade tip shroud outer surface 118 includes a first non-arcuate portion 130, i.e. a flat, , and a second non-arcuate portion 132, or flat, that are coupled together at an apex 134 such that outer surface 118 has a substantially V-shaped cross-sectional profile 120. In the exemplary embodiment, first and second portions 130 and 132 are formed unitarily with turbine blade 110. More specifically, EDM apparatus 122 is utilized to remove portion 116 such that outer surface 118 has a substantially V-shaped cross-sectional profile.

Moreover, each seal tooth 114 includes a first non-arcuate portion 140, or flat, and a second non-arcuate portion 142, or flat, that are coupled together at an apex 144 such each seal tooth 114 has a substantially V-shaped cross-sectional profile 120. In the exemplary embodiment, first and second portions 140 and 142 are formed unitarily with turbine blade 110. More specifically, EDM apparatus 122 is utilized to remove portion 116 such that each seal tooth 114 has a substantially V-shaped cross-sectional profile 120.

The methods described herein facilitate improving the form of the seal teeth and the shroud non-flowpath surface of a gas turbine blade such that the turbine blade can be fabricated utilizing a wire cut EDM apparatus. More specifically, known EDM machines can not produce curved surfaces in the circumferential direction of the turbine blade. Accordingly, the turbine blade described herein does not include the curved form of the shroud and seal teeth of a known turbine blade, rather the arched or curved radially outer surface of the outer shroud is replaced by two flat surfaces, wherein each flat surface spans half the circumferential width of the shroud. Fabricating a turbine blade, that includes an outer shroud having a radially outer surface that is formed by two flat surfaces, facilitates reducing leakage between the seal teeth and the stator shroud. Moreover, although the exemplary embodiment, illustrates an outer shroud and seal teeth each having two substantially flat surfaces, it should be realized that the exemplary turbine blade can include three or more flat surface that define the radially outer surface of the outer shroud and seal teeth.

Accordingly, the methods and apparatus described herein facilitate reducing the amount of machining that is needed to produce LPT Blades from TiAl material, thus reducing cost and cycle time to fabricate a turbine blade. Moreover, the reduced cost and cycle time to fabricate the turbine blade described herein also facilitates reducing the overall weight of the gas turbine engine.

The above-described methods and apparatus are cost-effective and highly reliable. The turbine blade described herein includes a radially outer surface and at least one seal tooth that each include at least two substantially flat surfaces to facilitate reducing the time and cost of fabricating a gas turbine engine.

While the invention has been described in terms of various specific embodiments, those skilled in the art will recognize that the invention can be practiced with modification within the spirit and scope of the claims.

## Claims

1. A turbine rotor blade (56) comprising:
a blade tip shroud (112) comprising a radially outer surface (118) having at least two substantially flat surfaces; and
at least one seal tooth (114) coupled to said blade tip shroud.

2. A turbine rotor blade (56) in accordance with Claim 1 wherein said blade tip shroud (112) has a substantially V-shaped cross-sectional profile (120).

3. A turbine rotor blade (56) in accordance with Claim 1 or 2, wherein each blade tip shroud flat surface spans approximately half the circumferential width of said blade tip shroud (112).

4. A turbine rotor blade (56) in accordance with Claim 1, 2 or 3, further comprising two seal teeth (86), wherein each seal tooth (114) comprises a radially outer surface (118) having at least two substantially flat surfaces.

5. A turbine rotor blade (56) in accordance with Claim 1, 2 or 3, further comprising two seal teeth (86), wherein each seal tooth (114) has a substantially V-shaped cross-sectional profile (120).

6. A turbine rotor blade (56) in accordance with any preceding Claim, wherein said turbine blade comprises a titanium aluminide material.

7. A turbine rotor blade (56) in accordance with any preceding Claim, wherein said turbine blade is coupled to a low pressure turbine (20).

8. A gas turbine engine rotor assembly (40) comprising:
a low pressure turbine rotor (44); and
a plurality of circumferentially-spaced rotor blades (56) coupled to said low pressure turbine rotor, each said rotor blade comprising:
a blade tip shroud (112) comprising a radially outer surface (118) having at least two substantially flat surfaces; and
at least one seal tooth (114) coupled to said blade tip shroud.

9. A gas turbine engine rotor assembly (40) in accordance with Claim 8 wherein said blade tip shroud (112) has a substantially V-shaped cross-sectional profile (120).

10. A gas turbine engine rotor assembly (40) in accordance with Claim 8 or 9, wherein each blade tip shroud flat surface spans approximately half the circumferential width of said blade tip shroud (112).
